# EUROPÄISCHE PATENTSCHRIFT

(11) **EP 1 721 084 B1**
(45) Veröffentlichungstag und Bekanntmachung des Hinweises auf die Patenterteilung: **23.03.2011**
(21) Anmeldenummer: 05716602.7
(22) Anmeldetag: 28.01.2005
(51) Int. Cl.: F16C 3/12, B60S 1/24

(54) **KURBELWELLENANORDNUNG UND FORMTEIL FÜR EINE KURBELWELLENANORDNUNG**
CRANKSHAFT ARRANGEMENT AND STRUCTURAL PART FOR SAID CRANKSHAFT ARRANGEMENT
SYSTEME BIELLE-MANIVELLE ET PIECE USINEE POUR UN SYSTEME BIELLE-MANIVELLE

(30) Priorität: 27.02.2004 DE 102004009717
(43) Veröffentlichungstag der Anmeldung: 15.11.2006
(73) Patentinhaber: ROBERT BOSCH GMBH, 70442 Stuttgart (DE)
(72) Erfinder: LAUK, Detlef, 77871 Renchen (DE); HAWIGHORST, Achim, 77830 Buehlertal (DE)
(74) Vertreter: Gleiss & Grosse
(86) Internationale Anmeldenummer: PCT/EP2005/050364
(87) Internationale Veröffentlichungsnummer: WO 2005/083279

(56) Entgegenhaltungen:
- WO-A-01/21460
- WO-A-03/039922
- DE-A1- 2 647 510
- DE-U1- 29 516 807
- US-A- 2 741 932
- US-A- 3 039 798
- US-A- 4 598 614

## Beschreibung

### Stand der Technik

Die Erfindung geht aus von einer Kurbelwellenanordnung sowie einem Formteil für eine Kurbelwellenanordnung nach den Oberbegriffen der Ansprüche 1 und 8.

Kurbelwellenanordnungen, insbesondere für Scheibenwischanlagen, sind bekannt. Zum Übertragen eines Drehmoments von einer Antriebseinheit auf eine Kurbel wurde bereits vorgeschlagen, die Kurbel mit einer Welle zu vernieten oder eine axial auf ein konisches Rändel der Welle aufgesetzte Kurbel mit der Welle mittels einer Mutter zu verschrauben. Die Herstellung der Verbindung erfordert eine Mehrzahl von Arbeitsschritten, etwa zum Gewindeschneiden auf der Welle, sowie eine relativ große Länge der Welle zum Festschrauben der Mutter.

Beispielsweise zeigt die WO 01/21460 A1 eine Antriebswelle für einen Scheibenwischer, an der eine Kurbel befestigt ist. Dabei ist vorgesehen, dass ein Grundkörper der Antriebswelle aus einem stranggepressten Leichtmetallprofil hergestellt ist und an seinem freien Ende im Bereich eines Befestigungsteils ein Anschlussteil aus einem härteren Werkstoff trägt, das ein Schraubengewinde besitzt.

Weiterhin zeigt die US 3,039,798 eine Kurbelanordnung und ein Verfahren, um ein zylindrisches Element an einer Welle zu befestigen.

### Vorteile der Erfindung

Erfindungsgemäß wird eine Kurbelwellenanordnung vorgeschlagen, bei der eine Kurbel über ein separates Formteil mit einer Welle verbunden ist, wobei das Formteil an seiner zweiten Stirnfläche einen Steg aufweist. Das Formteil bildet ein Zwischenstück zwischen der Kurbel und der Welle, insbesondere Abtriebswelle, des Motors. Ist der Motor, insbesondere ein Antriebsmotor einer Scheibenwischanlage, komplett zusammengebaut, kann die Welle beim Aufpressen der Kurbel auf die Welle nicht an deren Antriebszahnrad abgestützt werden. Das Formteil muss radiale Kraft übertragen, was über einen Formschluss durch das Aufpressen gewährleistet werden kann. Die Welle kann als glatter Zylinder ausgebildet sein oder als Mehrkantelement. Das Formteil kann einen Innenrändel aus gehärtetem oder entsprechendem Material aufweisen, so dass sich der Rändel in die Welle einpresst. Es ist auch denkbar, dass die Welle an ihrer Außenseite einen Rändel aufweist und sich beim Aufpressen sich in das Formteil einprägt. Ferner können Welle und Formteil eine Verzahnung miteinander bilden. Dies ist auch für die Verbindung zwischen Kurbel und Formteil denkbar. Ein Fachmann wird zur Befestigung eine ihm sinnvoll erscheinende Kombination auswählen. Das Formteil kann unabhängig von der Kurbel auf der Welle montiert und auf dieser axial gesichert werden. Die Sicherung kann durch Verstemmen, Verschweißen und dergleichen erfolgen. Ferner kann eine Abstützung gegen ein Getriebegehäuse oder einen Lagerflansch vorgesehen sein, die eine axiale Belastung von der Welle und/oder von einem Antriebszahnrad fernhält. Beim späteren Befestigen der Kurbel auf dem Formteil kann sichergestellt werden, dass die axiale Belastung der Welle praktisch vernachlässigbar ist. Bei einer Scheibenwischeranlage mit einer derartigen Kurbelwellenvorrichtung lässt sich die Kurbel problemlos auf der Welle eines Antriebsmotors montieren, wenn dieser bereits in der Wischeranlage eingebaut ist. Die Welle kann insgesamt kürzer ausgeführt werden als bei einer üblichen Schraubbefestigung, zusätzliche Arbeitsschritte zum Gewindeschneiden auf der Welle können entfallen, und der Antriebsmotor wird gegenüber axialer Belastung geschont.

Eine günstige axiale Fixierung der Kurbel auf dem Formteil besteht darin, das Formteil an seiner ersten Stirnfläche mit einem in radialer Richtung nach außen umlegbaren Rand zu versehen. Im Montagezustand ragt der Rand axial von der ersten Stirnfläche weg. Im umgelegten Zustand übergreift der Rand die Kurbel im Bereich der Bohrung, so dass die Kurbel auf dem Formteil und damit auf der Welle axial festgelegt ist. Weist dann die Welle an ihrem dem Formteil zugewandten Ende ein Gewinde mit einer Sollbruchstelle zum Trennen des Gewindes von der Welle auf, kann das Umlegen des Randes auf besonders einfache und zuverlässige Weise erfolgen, indem eine Mutter aufgeschraubt wird. Vorteilhaft kann gleichzeitig das Formteil über das Gewinde durch Aufschrauben der Mutter mit der Kurbel verpresst werden, ohne dass das Getriebegehäuse bzw. das Lager eine Kraft aufnehmen muss. Dadurch wird auch vermieden, dass eine Kraft auf das Antriebszahnrad des Antriebsmotors ausgeübt wird. Der Rand des Formteils wird dadurch nach außen umgelegt, dass, vorzugsweise nach dem Verpressen der Kurbel mit dem Formteil, die Mutter weiter auf das Gewinde aufgeschraubt und der Rand beim Aufschrauben nach außen gedrückt wird. Zweckmäßigerweise wird die Mutter solange angezogen, bis das Gewinde an der Sollbruchstelle abbricht.

Eine einfache Verbindung der Kurbel mit dem Formteil ist möglich, wenn das Formteil mit seiner ersten Stirnfläche in eine Bohrung der Kurbel hineinragt. Die Kurbel kann auf vielfältige Weise auf dem Formteil axial gesichert werden, etwa durch Verschweißen, Kerben, Taumeln, durch einen Sicherungsring, eine so genannte Speednut und dergleichen. Die Art der Sicherung kann bedarfsabhängig ausgewählt werden.

Besonders günstig für eine die Welle schonende Montage der Kurbel ist, wenn das Formteil an seiner zweiten Stirnfläche den Steg zur Abstützung auf einem Gegenlager aufweist. Das Gegenlager kann z.B. ein Getriebegehäuse oder ein Lagerflansch einer Exzenterbuchse sein, auf dem die Kurbelwellenanordnung angeordnet ist. Das Formteil stützt sich auf dem Gegenlager ab, und die Kurbel kann auf das Formteil aufgepresst werden, ohne dass die Welle axial belastet wird. Vorzugsweise bildet der Steg einen Boden einer sich in axialer Richtung von der ersten und zweiten Stirnfläche weg erstreckenden Hülse. Ein innerhalb der Hülse liegender Körper, wie etwa ein Lagerflansch oder ein Getriebegehäuse, kann vor Spritzwasser geschützt werden. Dies ist besonders in Scheibenwischeranlagen vorteilhaft. Ein separater Wasserschutz sowie dessen Befestigungsteile können entfallen.

Die Übertragung eines Drehmoments von der Welle auf die Kurbel ist gewährleistet, wenn das Formteil mit der Welle wenigstens verdrehsicher verbunden ist. Dazu kann die üblicherweise runde Welle an ihrem in eine Bohrung des Formteils hineinragenden Ende eine plane Fläche oder eine Kante aufweisen und das Formteil eine entsprechende plane Fläche oder Kante in seiner Bohrung. Günstig ist eine Mehrkant-Kontur oder auch eine Rändelkontur der Welle, wobei das Rändel eine Vielzahl von Zähnen aufweist, mit einer entsprechenden Ausgestaltung der Bohrung der Kurbel, so dass eine Verdrehsicherung gewährleistet ist. Das Formteil kann eine zylindrische Außenwand oder alternativ eine sich zur ersten Stirnfläche hin verjüngende Außenwand aufweisen, wobei die Außenwand glatt oder als Mehrkant oder Rändel ausgebildet sein kann.

Ferner wird ein Formteil für eine Kurbelwellenvorrichtung zum Verbinden einer Kurbel mit einer Welle vorgeschlagen, wobei eine Hülse des Formteils an einer ihrer Stirnseiten einen Steg aufweist. Dabei soll die Hülse an ihrer der einen Stirnseite gegenüberliegenden Stirnseite einen in radialer Richtung nach außen umlegbaren Rand aufweisen. Der Steg stellt sicher, dass bei der Montage der Kurbel eine axiale Belastung der Welle möglichst gering ist. Eine Befestigung der Kurbel auf der Welle kann unabhängig von der Befestigung des Formteils auf der Welle erfolgen.

Die Hülse weist an ihrer der einen Stirnseite gegenüberliegenden Stirnseite den in radialer Richtung nach außen umlegbaren Rand auf, so dass sich die Kurbel durch einfaches Umlegen des Randes auf dem Formteil axial sichern lässt.

Ein Spritzwasserschutz lässt sich in das Formteil auf einfache Weise integrieren, wenn der Steg einen Boden einer sich in axialer Richtung von den Stirnflächen weg erstreckenden Hülse bildet. Innerhalb dieser Hülse liegende Elemente sind vor Spritzwasser weitestgehend geschützt.

### Zeichnungen

Die Erfindung wird nachfolgend ohne Beschränkung der Allgemeinheit in Zeichnungen anhand von Ausführungsbeispielen näher erläutert, aus denen auch unabhängig von der Zusammenfassung in den Ansprüchen weitere Aspekte, Merkmale und Vorteile der Erfindung zu entnehmen sind, die ein Fachmann auch in unterschiedlichen, sinnvollen Kombinationen betrachten wird. Es zeigen:
- Fig. 1 a, b: einen Längsschnitt durch eine erste bevorzugte Ausgestaltung (a) einer Kurbelwellenvorrichtung nach der Erfindung und einer zweiten Ausgestaltung mit einer alternativen Befestigung des Formteils (b);
- Fig. 2 a-I: jeweils eine Aufsicht auf und einen Schnitt durch verschiedene bevorzugte Ausgestaltungen eines Formteils;
- Fig. 3: eine Kurbelwellenvorrichtung nach dem Stand der Technik;
- Fig. 4 a, b: eine bevorzugte Ausgestaltung einer Kurbelwellenvorrichtung mit umlegbarem Rand vor (a) und nach (b) dem Umlegen des Ran- des mit konischem Formteil; und
- Fig. 5 a, b: eine weitere bevorzugte Ausgestaltung einer Kurbelwellenvor- richtung mit umlegbarem Rand vor (a) und nach (b) dem Umle- gen des Randes mit zylinderförmigem Formteil.

### Beschreibung der Ausführungsbeispiele

Die Kurbelwellenvorrichtung ist insbesondere für eine Scheibenwischanlage geeignet, bei der eine Welle eines Antriebsmotors mit einer Kurbel zum Antreiben eines Wischerelements in Antriebsverbindung steht.

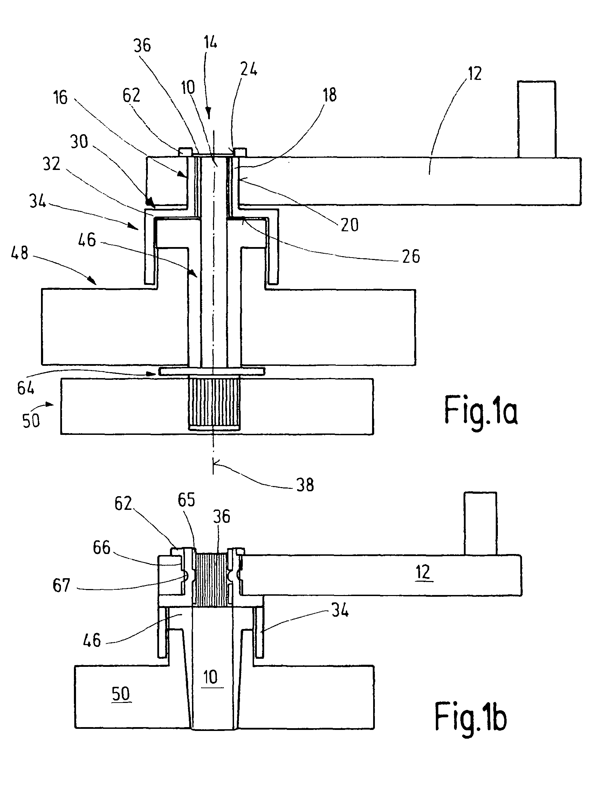

Fig. 1 a zeigt einen Längsschnitt durch eine bevorzugte Ausgestaltung einer Kurbelwellenvorrichtung nach der Erfindung. Auf einem nicht dargestellten Antriebsmotor ragt dessen Welle 10 durch ein Antriebszahnrad 50, ein Getriebegehäuse 48 und eine Exzenterbuchse 46 in eine Bohrung 14 einer Kurbel 12. Zwischen dem Antriebszahnrad 50 und der Exzenterbuchse 46 ist eine Federscheibe 64 angeordnet. Die Welle 10 endet in einem als Rändel ausgebildeten Mehrkantelement 36, das integraler Bestandteil der Welle 10 sein kann oder das mit dieser fest verbunden, insbesondere auf die Welle 10 aufgepresst, ist. Auf die Welle 10 bzw. auf das Mehrkantelement 36 ist kraftschlüssig und formschlüssig eine Hülse 18 eines Formteils 16 aufgepresst.

Das Formteil 16 ragt mit seiner ersten Stirnfläche 24 in die Bohrung 14 der Kurbel 12 hinein. Die Bohrung 14 ist zweckmäßigerweise an die Form der Außenwand 20 des Formteils 16 angepasst. An seiner zweiten Stirnfläche 26 ist ein insbesondere als umlaufender Bundsteg ausgebildeter Steg 30 angeordnet, mit dem das Formteil 16 auf der Exzenterbuchse 46 als Gegenlager aufsitzt. Auf das Formteil 16 ist die Kurbel 12 aufgepresst, die somit über das Formteil 16 mit dem Mehrkantelement 36 und damit mit der Welle 10 verbunden ist. Die Kurbel 12 ist axial auf dem Formteil 16 durch eine Fixierung 62, beispielsweise eine Verschweißung, gesichert.

Der Steg 30 bildet gemäß einer bevorzugten Ausgestaltung einen Boden 32 einer sich in axialer Richtung 38 von der ersten und zweiten Stirnfläche 24, 26 weg erstreckenden Hülse 34 und wirkt als Spritzwasserschutz für die Exzenterbuchse 46 und das Getriebegehäuse 48.

Eine alternative Befestigung des Formteils 16 auf der Welle 10 bzw. dem Mehrkantelement 36 zeigt die Fig. 1 b, die nur einen Ausschnitt der Anordnung aus Fig. 1 a zeigt. Die Anordnung entspricht weitgehend derjenigen in Fig. 1 a. Zwischen der Innenwand der Bohrung 14 und der Innenwand des Formteils 16 ist ein als Rändel ausgebildetes Mehrkantelement 65 angeordnet. Ebenso ist zwischen der an seiner in die Bohrung 14 ragenden Außenwand des Formteils 16 und der Bohrung 14 der Kurbel 12 ein als Rändel ausgebildetes Mehrkantelement 66 angeordnet. Das Formteil 16 ist mit einer Einkerbung 67 axial auf der Welle 10 bzw. dem Mehrkantelement 36 gesichert. Weiterhin ist die Exzenterbuchse 46 konisch ausgebildet, und das Getriebegehäuse 56 weist eine entsprechend angepasste Öffnung auf.

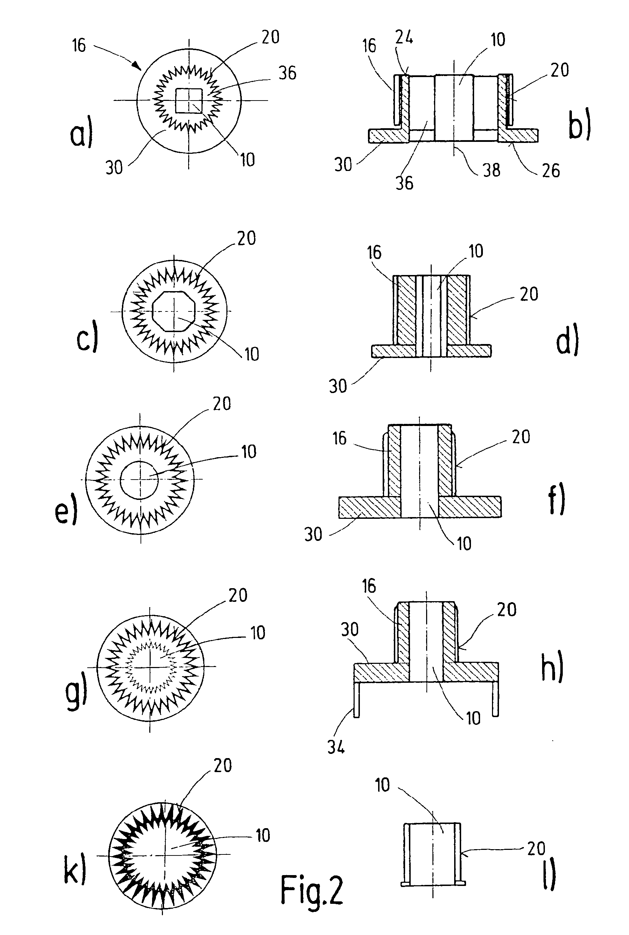

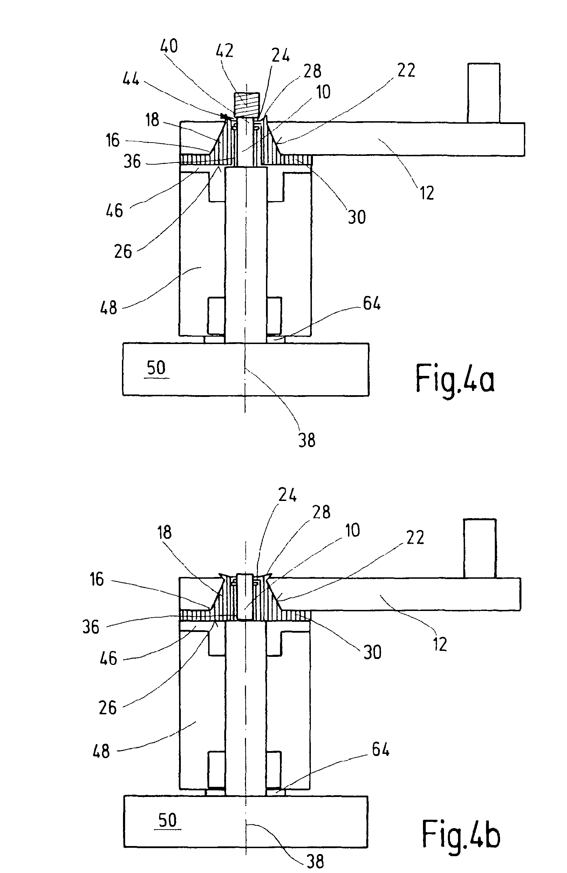

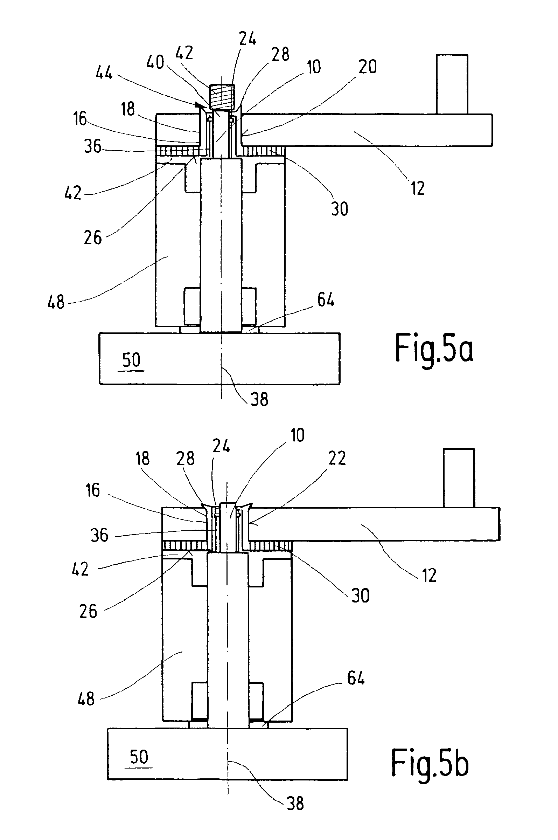

Eine Aufsicht auf und einen Schnitt durch verschiedene bevorzugte Ausgestaltungen eines Formteils 16 ist in Fig. 2 a-l dargestellt. Die Aufsicht auf in Fig. 2a lässt im Zentrum eine Welle 10 erkennen, die als Vierkant ausgebildet ist. Die Welle 10 ist von einem Formteil 16 umgeben, dessen Außenwand 20 ein als Rändel ausgebildeten Mehrkantelement 36 bildet. Der Schnitt in Fig. 2b zeigt die Welle 10 im Zentrum des Formteils 16 und die Außenwand 20 des Formteils 16, das an seiner zweiten Stirnfläche 26 einen Steg 30 zur Abstützung auf einem Gegenlager aufweist. In Fig. 2c und 2d ist eine Aufsicht und ein Schnitt dargestellt wobei, wobei die Welle 10 als Achtkant ausgebildet ist und die Innenbohrung des diese umgebenden Formteils 16 bildet entsprechend einen Innenachtkant bildet. Die Außenwand 20 des Formteils 16 ist als Rändel ausgebildet. Die Figur 2e und 2f zeigt eine Aufsicht und einen Schnitt mit einer zylindrischen Welle 10. Die Fig. 2g und 2h zeigt eine Aufsicht und einen Schnitt mit einer als Außenrändel ausgebildeten Außenwand 20 der Welle 10 und einem Formteil 16 mit Innen- und Außenrändel. Das Formteil 16 weist hier optional eine Hülse 34 als Spritzwasserschutz auf, der an allen hier dargestellten Formteilausführungen vorgesehen sein kann. Die Fig. 2k und 2l zeigt eine Aufsicht und einen Schnitt mit einem Formteil 16, dessen Innenbohrung tiefgezogen ist und einen Innen- und Außenrändel bildet, wobei auch die Welle 10 einen Außenrändel aufweist. Selbstverständlich können bei allen Ausführungen zum axialen Fixieren der Kurbel 12 am Formteil 16 ein nach außen umlegbarer Rand am Formteil 16 vorgesehen sein, wie später in den Fig. 4 und 5 beschrieben ist.

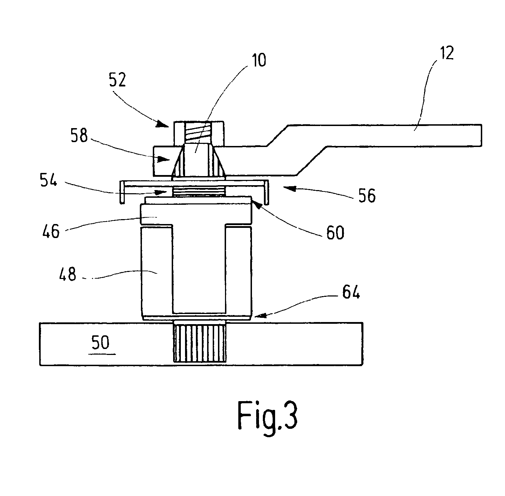

Eine Kurbelwellenanordnung nach dem Stand der Technik zeigt zum Vergleich Figur 3. Eine Kurbel 12 umgibt mit ihrer Bohrung 14 ein konisches Rändel 58, das auf einer Welle 10 eines nicht dargestellten Antriebsmotors sitzt. Unterhalb des Rändels 58 sind Rillen 54 angeordnet, die zur Befestigung eines Arretierelements 60 (Speednut) auf einer mit einem Getriebegehäuse 48 verbundenen Exzenterbuchse 46 dienen. Unterhalb des Rändels 58 und oberhalb der Rillen 54 ist ein topfförmig ausgebildetes Element 56 als Spritzwasserschutz angeordnet, welches den oberen Bereich der Exzenterbuchse 46 abdeckt. Die Kurbel 12 ist axial auf der Welle 10 durch eine aufgeschraubte Befestigungsmutter 52 gesichert, die auf ein Gewinde der Welle 10 aufgeschraubt ist. Die Kurbelwellenvorrichtung nach dem Stand der Technik weist durch die Befestigungsmutter 52 eine größere Bauhöhe auf, während die erfindungsgemäße Kurbelwellenvorrichtung deutlich kleiner baut.

Fig. 4 a, b zeigt eine bevorzugte Ausgestaltung einer Kurbelwellenvorrichtung mit umlegbarem Rand 28 vor (a) und nach (b) dem Umlegen des Randes 28 mit einem Formteil 16. Eine Welle 10 ist durch ein Antriebszahnrad 50, ein Getriebegehäuse 48, eine Exzenterbuchse 46 und das Formteil 16 durchgeführt und endet in einem Mehrkantelement 36. Das Mehrkantelement 36 ist fest mit der Welle 10 verbunden, beispielsweise aufgepresst, oder einstückig mit dieser ausgebildet. Das Formteil 16 verjüngt sich zu seiner ersten Stirnfläche 24 hin und ist insbesondere konisch ausgebildet. Es weist eine an das Mehrkantelement 36 angepasste Innenbohrung auf, so dass eine Verdrehsicherung gewährleistet ist. Der in radialer Richtung nach außen umlegbare Rand 28 ist auf der ersten Stirnfläche 24 des Formteils 16 angeordnet. An seiner zweiten Stirnfläche 26 ist ein den unteren Bereich seiner Außenwand 22 umgebender Steg 30 angeordnet, mit dem sich das Formteil 16 auf der Exzenterbuchse 46 abstützt.

An ihrem dem Formteil 16 zugewandten Ende 40 weist die Welle 10 ein Gewinde 42 mit einer Sollbruchstelle 44 zum Trennen des Gewindes 42 von der Welle 10 auf. In aufgestelltem Zustand des Randes 28 kann die Kurbel 12 auf das Formteil 16 montiert werden. Um die Kurbel 12 auf das Formteil 16 zu pressen und auf der Welle 10 axial zu sichern, kann eine zeichnerisch nicht dargestellte Mutter auf das Gewinde 42 aufgeschraubt werden, die beim Anziehen erst die Kurbel 12 auf das Formteil 16 presst und dann bei weiterem Anziehen den Rand 28 nach außen verdrängt. Die Mutter kann solange angezogen werden, bis das Gewinde 42 an der Sollbruchstelle 44 abbricht und die Anordnung ihre vorteilhafte geringe Bauhöhe erreicht. Diesen Zustand zeigt Fig. 4b.

Fig. 5 a, b zeigt eine weitere bevorzugte Ausgestaltung einer Kurbelwellenvorrichtung mit umlegbarem Rand 28 vor (a) und nach (b) dem Umlegen des Randes 28 mit einem Formteil 16 mit zylinderförmiger Außenwand 20. Die Anordnung entspricht der in Fig. 4, und die axiale Sicherung der Kurbel 12 erfolgt in gleicher Weise wie dort dargestellt. Zur Beschreibung wird auf die Fig. 4 verwiesen.

## Patentansprüche

1. Kurbelwellenvorrichtung, insbesondere für eine Scheibenwischanlage, bei der eine Welle (10) mit einer Kurbel (12) in Antriebsverbindung steht, wobei die Kurbel (12) über ein separates Formteil (16) mit der Welle (10) verbunden ist, wobei das Formteil (16) an seiner zweiten Stirnfläche (26) einen Steg (30) aufweist, **dadurch gekennzeichnet, dass** das Formteil (16) an seiner ersten Stirnfläche (24) einen in radialer Richtung nach außen umlegbaren Rand (28) aufweist.

2. Kurbelwellenvorrichtung nach Anspruch 1, **dadurch gekennzeichnet, dass** das Formteil (16) mit seiner ersten Stirnfläche (24) in eine Bohrung (14) der Kurbel (12) hineinragt.

3. Kurbelwellenvorrichtung nach Anspruch 1 oder 2, **dadurch gekennzeichnet, dass** das Formteil (16) an seiner zweiten Stirnfläche (26) den Steg (30) zur Abstützung auf einem Gegenlager aufweist.

4. Kurbelwellenvorrichtung nach einem der Ansprüche 1 bis 3, **dadurch gekennzeichnet dass** der Steg (30) einen Boden einer sich in axialer Richtung (38) von der ersten und zweiten Stirnfläche (24,26) weg ersteckenden Hülse (34) bildet.

5. Kurbelwellenvorrichtung nach einem der vorhergehenden Ansprüche, **dadurch gekennzeichnet, dass** das Formteil (16) mit der Welle (10) wenigstens verdrehsicher verbunden ist.

6. Kurbelwellenvorrichtung nach einem der vorhergehenden Ansprüche, **dadurch gekennzeichnet, dass** das Formteil (16) eine zylindrische Außenwand (20) aufweist.

7. Kurbelwellenvorrichtung nach einem der Ansprüche 2 bis 6, **dadurch gekennzeichnet, dass** das Formteil (16) eine sich zur ersten Stirnfläche (24) hin verjüngende Außenwand (22) aufweist.

8. Formteil für eine Kurbelwellenvorrichtung zum Verbinden einer Kurbel (12) mit einer Welle (10), wobei eine Hülse (18) des Formteils an einer ihrer Stirnseiten (26) einen Steg (30) aufweist, **dadurch gekennzeichnet, dass** die Hülse (18) an ihrer der einen Stirnseite (26) gegenüberliegenden Stirnseite (24) einen in radialer Richtung nach außen umlegbaren Rand (28) aufweist.

9. Formteil nach Anspruch 8, **dadurch gekennzeichnet, dass** der Steg (30) einen Boden (32) einer sich in axialer Richtung (38) von den Stirnflächen (24,26) weg erstreckenden Hülse (34) bildet.

## Claims

1. Crankshaft arrangement, in particular for a window wiper system, in which a shaft (10) is connected for driving purposes to a crank (12), wherein the crank (12) is connected to the shaft (10) via a separate structural part (16), and wherein the structural part (16) has a web (30) on the second end surface (26) thereof, **characterized in that** the structural part (16) has, on the first end surface (24) thereof, an edge (28) which can be doubled over outwards in the radial direction.

2. Crankshaft arrangement according to Claim 1, **characterized in that** the structural part (16) projects with the first end surface (24) thereof into a bore (14) in the crank (12).

3. Crankshaft arrangement according to Claim 1 or 2, **characterized in that** the structural part (16) has the web (30) on the second end surface (26) thereof for supporting on a counterbearing.

4. Crankshaft arrangement according to one of Claims 1 to 3, **characterized in that** the web (30) forms a base of a sleeve (34) which extends away from the first and second end surfaces (24, 26) in the axial direction (38).

5. Crankshaft arrangement according to one of the preceding claims, **characterized in that** the structural part (16) is connected to the shaft (10) at least in a manner secure against rotation.

6. Crankshaft arrangement according to one of the preceding claims, **characterized in that** the structural part (16) has a cylindrical outer wall (20).

7. Crankshaft arrangement according to one of Claims 2 to 6, **characterized in that** the structural part (16) has an outer wall (22) tapering towards the first end surface (24).

8. Structural part for a crankshaft arrangement for connecting a crank (12) to a shaft (10), wherein a sleeve (18) of the structural part has a web (30) on one of the end sides (26) thereof, **characterized in that** the sleeve (18) has, on the end side (24) thereof opposite the end side (26), an edge (28) which can be doubled over outwards in the radial direction.

9. Structural part according to Claim 8, **characterized in that** the web (30) forms a base (32) of a sleeve (34) which extends away from the end surfaces (24, 26) in the axial direction (38).

## Revendications

1. Système bielle-manivelle, en particulier pour un bras d'essuie-glace, dans lequel un arbre (10) est en liaison d'entraînement avec une manivelle (12), la manivelle (12) étant connectée à l'arbre (10) par le biais d'une pièce moulée séparée (16), la pièce moulée (16) présentant sur sa deuxième face frontale (26) une nervure (30), **caractérisé en ce que** la pièce moulée (16) présente sur sa première face frontale (24) un bord (28) pouvant être recourbé vers l'extérieur dans la direction radiale.

2. Système bielle-manivelle selon la revendication 1, **caractérisé en ce que** la pièce moulée (16) pénètre avec sa première face frontale (24) dans un alésage (14) de la manivelle (12).

3. Système bielle-manivelle selon la revendication 1 ou 2, **caractérisé en ce que** la pièce moulée (16) présente, sur sa deuxième face frontale (26), la nervure (30) pour le support sur un palier conjugué.

4. Système bielle-manivelle selon l'une quelconque des revendications 1 à 3, **caractérisé en ce que** la nervure (30) forme un fond d'une douille (34) s'étendant à l'écart de la première et de la deuxième face frontale (24, 26) dans la direction axiale (38).

5. Système bielle-manivelle selon l'une quelconque des revendications précédentes, **caractérisé en ce que** la pièce moulée (16) est connectée à l'arbre (10) au moins de manière imperdable.

6. Système bielle-manivelle selon l'une quelconque des revendications précédentes, **caractérisé en ce que** la pièce moulée (16) présente une paroi extérieure cylindrique (20).

7. Système bielle-manivelle selon l'une quelconque des revendications 2 à 6, **caractérisé en ce que** la pièce moulée (16) présente une paroi extérieure (22) qui se rétrécit vers la première face frontale (24).

8. Pièce moulée pour un système bielle-manivelle pour connecter une manivelle (12) à un arbre (10), une douille (18) de la pièce moulée présentant sur l'un de ses côtés frontaux (26) une nervure (30), **caractérisée en ce que** la douille (18) présente sur son côté frontal (24) opposé au premier côté frontal (26), un bord (28) pouvant être recourbé vers l'extérieur dans la direction radiale.

9. Pièce moulée selon la revendication 8, **caractérisée en ce que** la nervure (30) forme un fond (32) d'une douille (34) s'étendant à l'écart des faces frontales (24, 26) dans la direction axiale (38).
